# EUROPÄISCHE PATENTSCHRIFT

(11) **EP 1 952 238 B1**
(45) Veröffentlichungstag und Bekanntmachung des Hinweises auf die Patenterteilung: **01.07.2009**
(21) Anmeldenummer: 06830033.4
(22) Anmeldetag: 17.11.2006
(51) Int. Cl.: G06F 11/08, G06F 11/16, G05B 19/042

(54) **BUSMODUL ZUM ANSCHLUSS AN EIN BUSSYSTEM SOWIE VERWENDUNG EINES SOLCHEN BUSMODULS IN EINEM AS-I-BUSSYSTEM**
BUS MODULE TO BE CONNECTED TO A BUS SYSTEM, AND USE OF SUCH A BUS MODULE IN AN AS-I BUS SYSTEM
MODULE DE BUS A RACCORDER A UN SYSTEME DE BUS ET UTILISATION D'UN MODULE DE BUS DE CE TYPE DANS UN SYSTEME DE BUS AS-I

(30) Priorität: 21.11.2005 DE 102005055428
(43) Veröffentlichungstag der Anmeldung: 06.08.2008
(73) Patentinhaber: SIEMENS AKTIENGESELLSCHAFT, 80333 München (DE)
(72) Erfinder: RITZ, Gudrun, 91056 Erlangen (DE); WEICHHOLD, Peter, 90574 Rosstal (DE); WOLSKI, Jürgen, 91239 Henfenfeld (DE)
(86) Internationale Anmeldenummer: PCT/EP2006/068623
(87) Internationale Veröffentlichungsnummer: WO 2007/057445

(56) Entgegenhaltungen:
- US-B1- 6 505 321

## Beschreibung

Die Erfindung betrifft ein Busmodul zum Anschluss an ein Bussystem, welches Mittel zur Ausgabe sicherheitsgerichteter Signale in Form von sich wiederholenden eindeutigen Kodefolgen aufweist. Die Erfindung betrifft zudem die Verwendung eines solchen Busmoduls in einem AS-i-Bussystem.

Derartige Busmodule können beispielsweise an ein AS-i-Bussystem nach der EN 50295-Norm bzw. nach dem zur Veröffentlichung anstehenden IEC 62026-2-Standard angeschlossen werden. Bei dem AS-i-Bussystem (AS-i für Actuator Sensor Interface) handelt es sich um einen Feldbus, der ein ungeschirmtes 2-Leiter-Flachkabel für die gemeinsame Übertragung von elektrischer Energie und Daten nutzt. Die maximale Kabellänge beträgt dabei ca. 100 m, wobei eine Verlängerung der Kabellänge durch Repeater möglich ist. Darüber hinaus ist jede Netzwerktopologie des Bussystems, wie z. B. eine Baumstruktur, zulässig.

An ein Bussystem der oben genannten Art können je nach Betriebsart bis zu 31 bzw. 62 Slaves an einen Master angeschlossen werden. Der Slave stellt eine datentechnische Verbindung zu einem Sensor oder zu einem Aktuator, der Master eine datentechnische Verbindung zu einem Hostsystem her, welches z. B. aus einer SPS (für Speicherprogrammierbare Steuerung), einem PC (für Personal Computer) oder aus einem Koppler zu einem übergeordneten Feldbussystem besteht. Die Funktionalität des Slaves ist vorzugsweise komplett im Sensor bzw. im Aktuator integriert.

Bei der Datenübertragung wird ein sicherheitsgerichtetes Signal in Form von sich wiederholenden eindeutigen Kodefolgen übertragen, wobei jedes Signal mehrfach auf Übertragungsfehler geprüft wird. Im Falle eines Fehlers wird die Kodefolge des Signals automatisch wiederholt, wobei dieser fehlerhaften Kodefolge dann zumindest neun korrekte Kodefolgen folgen müssen.

Das AS-i-Bussystem ist besonders für binäre und analoge Geräte der unteren Automatisierungsebene ausgebildet. Derartige Geräte sind z. B. Komponenten der Arbeitssicherheit wie Not-Aus-Schalter, Türkontakt-Schalter, Lichtvorhänge, Trittmatten, Absperrungen oder dergleichen. Die Signale solcher Sicherheitssensoren werden von einem Monitor überwacht, der über entsprechende Schaltausgänge Maschinen oder die Anlagen in einen sicheren Zustand versetzen kann.

Die Busmodule wie Slave, Master, Monitor oder Netzteil können an jeder beliebigen Stelle des Bussystems angeschlossen werden. Das Bussystem ist erweiterbar, leicht zu installieren und im Vergleich zu komplexeren Bussystemen wie Profibus, CAN-Bus erheblich günstiger in der Anschaffung.

Ein Busmodul mit der Funktionalität eines Slaves kann sicherheitsgerichtete Signale z. B. durch eine interne Verknüpfungslogik erzeugen. Die Signale können aber auch aus einem übergeordneten Bussystem oder aus einem angeschlossenen Rückwandbus eingelesen werden. Ein derartiges sicherheitsgerichtetes Signal kann z. B. aus einer ODER-Verknüpfung aus einem Trittmattensignal und aus einem Lichtvorhangsignal erzeugt werden. Das Signal wird vom Master zyklisch abgefragt und dann an den jeweils adressierten Aktuator weitergeleitet.

Ein sicherheitsgerichtetes Signal wird als sich wiederholende Kodefolge mit eindeutigen Kodierungen auf das Bussystem ausgegeben. Ist das Signal aktiv und für einen Aktuator zur Ausgabe bestimmt, so werden entsprechend der oben genannten Norm bzw. dem oben genannten Standard sieben Kodierungen zyklisch erzeugt, wobei sich eine aktuelle Kodierung von einer vorangegangenen Kodierung unterscheidet. Für einen Aktuator werden zyklisch sieben Kodierungen ä 4 Bit ausgegeben, wobei eine Kodierung mit vier logischen "0"-Werten oder vier "1"-Werten selbst nicht erzeugt wird. Anstelle der binären Wertebezeichnung "0" oder "1" für einen logischen Zustand ist auch die Wertebezeichnung "L" oder "H" gängig. Empfängerseitig, d. h. auf Seiten des Aktuators, wird diese 7 x 4-Bit-Kodefolge intern mit einer auf die gleiche Weise gebildeten Kodefolge verglichen. In einem Fehlerfall, d. h. bei einer detektierten Abweichung, setzt der Aktuator seinen Schaltausgang zurück. Ein Busmodul kann folglich den Schaltzustand eines Aktuators zurücksetzen, indem dieses die Kodefolge verändert oder aussetzt. Bei dem vorliegenden Beispiel wird z. B. bei Betreten der Trittmatte das sicherheitsgerichtete Signal zurückgenommen. Der adressierte Aktuator stellt eine Abweichung von der empfangenen zu der selbst generierten Vergleichsfolge fest und ändert daraufhin den Schaltzustand am Ausgang. Dadurch kann z. B. ein Warnlichtsignal eingeschaltet werden.

Im Falle der Adressierung eines Monitors werden entsprechend der oben genannten Norm bzw. des oben genannten Standards acht sich wiederholende Kodierungen anstelle von sieben sich wiederholenden Kodierungen verwendet. Im Fehlerfall bzw. bei Rücknahme eines sicherheitsgerichteten Signals durch das Busmodul ändert der Monitor in entsprechender Weise seinen Schaltzustand. Auf diese Weise kann z. B. die Energieversorgung der zu überwachenden Maschine oder der Anlage abgeschaltet werden.

Bisher erfolgte die Ausgabe der sicherheitsgerichteten Signale mittels einer Rechnereinheit, auf welcher eine sichere Software ausgeführt wird. In der Regel benötigen Sicherheitsgeräte bzw. Sicherheitssteuerungen vor ihrer Verwendung eine besondere Zulassung durch zuständige Aufsichtsbehörden, wie beispielsweise in Deutschland durch den TÜV oder durch die Berufsgenossenschaften. Das Sicherheitsgerät muss dabei vorgegebene Sicherheitsstandards einhalten, die beispielsweise in der europäischen Norm EN 954-1 niedergelegt sind, und zumindest die Sicherheitskategorie 3 der genannten europäischen Norm erfüllen.

Nachteil daran sind die extrem hohen Anforderungen an die eigene Fehlersicherheit eines Geräts und der damit verbundene Zeit- und Entwicklungsaufwand für die Zulassung bzw. für die Zertifizierung einer Sicherheitssoftware auf einem solchen Gerät. Insbesondere ist bei der Entwicklung der Sicherheitssoftware zu berücksichtigen, dass in allen möglichen Ausfallsfällen der Rechnereinheit sicher die ausgegebene Kodefolge zumindest verändert wird, so dass im darauf folgenden Zyklus, spätestens beim übernächsten Zyklus, der Aktuator bzw. der Monitor die fehlerhafte Kodefolge detektieren kann. So ist durchaus vorstellbar, dass bei einem Absturz der Rechnereinheit der Prozessor derart in einer Schleife verharrt, dass weiterhin die Kodefolge zyklisch ausgegeben wird.

Aus der US 6,505,321 B1 sind ein Verfahren und ein System zur Bildung eines Paritätsschutzes für Daten bekannt. Bei diesem bekannten System werden Paare von Bitgruppen übertragen. Jede Gruppe enthält Bits, welche Daten repräsentieren, sowie ein Paritätsbit. Der Paritätssinn jeder Gruppe des Paares von Bitgruppen ist entgegengesetzt zu dem Paritätssinn der anderen Gruppe des Paares von Bitgruppen. Empfangsseitig werden die empfangenen Gruppen einer Paritätsprüfung unterzogen, um festzustellen, ob der Paritätssinn der aufeinander folgenden Bitgruppen mit den Taktimpulsen alterniert. Ist das nicht der Fall, dann liegt ein Fehler vor.

Es ist eine Aufgabe der Erfindung, ein Busmodul anzugeben, bei welchem die oben genannten Nachteile vermieden werden.

Eine weitere Aufgabe der Erfindung ist es, eine geeignete Verwendung für ein solches Busmodul anzugeben.

Diese Aufgabe wird durch ein Busmodul zum Anschluss an ein Bussystem gemäß Anspruch 1 gelöst. Weitere vorteilhafte Ausführungsformen sind in den abhängigen Ansprüchen 2 bis 9 angegeben. In Anspruch 10 ist eine geeignete Verwendung eines solchen Bussystems angegeben.

Erfindungsgemäß weist das Busmodul eine erste und zweite Rechnereinheit mit Mitteln zur Ausführung von Softwareprogrammen auf, wobei ein Kodeerzeugerprogramm der ersten Rechnereinheit eine erste Teilkodefolge der Kodefolge und ein Kodeerzeugerprogramm der zweiten Rechnereinheit den restlichen Teil der Kodefolge als zweite Teilkodefolge erzeugt.

Der große Vorteil der Erfindung besteht darin, dass am Ausgang des Busmoduls nur dann eine ordnungsgemäße Kodefolge ausgegeben wird, wenn beide Rechnereinheiten ordnungsgemäß funktionieren. Fällt nun eine der Rechnereinheiten aus, so ändert sich die Teilkodefolge. Dadurch ändert sich auch die gesamte Kodefolge, deren Abweichung dann vom Monitor bzw. vom Aktuator sofort festgestellt werden kann.

Darüber hinaus ist in vorteilhafter Weise eine niedrigere Sicherheitskategorie für die auf der jeweiligen Rechnereinheit ausgeführte Sicherheitssoftware, insbesondere für die Kodeerzeugerprogramme, erforderlich. Das Zertifizierungs- bzw. Zulassungsverfahren wird dadurch vereinfacht und erheblich beschleunigt. Zudem verringert sich der Entwicklungsaufwand für eine solche Sicherheitssoftware deutlich.

Erzeugen die beiden Kodeerzeugerprogramme ausschließlich Kodierungen der jeweils eigenen Teilkodefolge, so kann die jeweils komplementäre, d. h. der von der gesamten Kodefolge verbleibende Teil, nicht von der anderen Rechnereinheit "erraten" werden, da die Kodierung der jeweils anderen Teilkodefolge nicht Bestandteil des jeweiligen Kodeerzeugerprogramms ist. Im Fall von 4-Bit breiten Kodierungen können z. B. in einem Speicherbereich einer Rechnereinheit nur die jeweiligen 2-Bit breiten Kodierungen hinterlegt sein, welche von einem Prozessor der jeweiligen Rechnereinheit nacheinander eingelesen und dann ausgegeben werden.

Typischerweise werden die beiden Rechnereinheiten mittels einer Synchronisierungsleitung, wie z. B. mittels einer Taktleitung, synchronisiert, so dass die beiden Teilkodefolgen synchron auf das Bussystem ausgegeben werden. Die beiden Rechnereinheiten können hierzu jeweils ein Ausgaberegister oder einen Ausgabeport aufweisen, an welchen die elektrischen Signale der jeweiligen Teilkodefolge abgegriffen werden können.

Insbesondere weist die Kodefolge Kodierungen mit einem 4-Bit breiten Wertebereich auf, welche sich insbesondere nach sieben oder acht Kodierungen wiederholen. Jede Kodierung ist dabei von einer vorangegangenen Kodierung verschieden. Aufeinander folgende gleiche Kodierungen zeigen eine fehlerhafte Kodefolge an. Dies ist häufig dann der Fall, wenn aufgrund eines gravierenden Fehlers bei der Abarbeitung eines Softwareprogramms eine so genannte "Exception" ausgelöst wird. In einem solchen Fall wird die weitere Prozessverarbeitung durch die Rechnereinheit gestoppt.

Gemäß der oben genannten Norm bzw. des oben genannten Standards weist die Kodefolge nur binäre Kodierungen mit maximal drei "0"-Werten oder drei "1"-Werten auf. Dies bedeutet, dass Bitfolgen eines jeweiligen Kodierungsbits der Kodefolge mit ausschließlich binären "0"-Werten oder "1"-Werten nicht zulässig sind. Diese Folgen würden insbesondere im Fall eines Stopps der Prozessverarbeitung ausgegeben.

In einer bevorzugten Ausführungsform der Erfindung erzeugen die beiden Kodeerzeugerprogramme außerdem je eine Freigabefolge, welche ausschließlich binäre "0"- und/oder "1"-Werte je Kodierungsbit enthält. Die Mittel zur Ausgabe der sicherheitsgerichteten Signale weisen UND-Elemente und/oder ODER-Elemente zur logischen Verknüpfung der Kodierungsbits der jeweiligen Teilkodefolgen mit den jeweiligen korrespondierenden Kodierungsbits der Freigabefolgen zur Bildung der Kodefolge auf.

Der besondere Vorteil ist, dass bei Erkennung eines fehlerhaften Verhaltens der (eigenen) Rechnereinheit die Ausgabe der Teilkodefolgen der anderen Rechnereinheit durch Änderungen der Werte der Freigabefolgen unterbunden werden kann. Ist z. B. der eine Eingang des UND-Elements mit dem korrespondierenden Ausgabeport eines Kodierungsbits der Teilkodefolge der einen Rechnereinheit verbunden, so durchläuft dieses Signal das UND-Element unverändert, wenn am anderen Eingang des UND-Elements eine 1-bit breite Freigabefolge mit "1"-Werten der anderen Rechnereinheit anliegt. Wird nun die Freigabefolge auf Werte mit einem "0"-Wert geändert, so liegen am Ausgang des UND-Elements nur noch "0"-Werte an. Spätestens im übernächsten Zyklus wird dann diese Kodefolge empfängerseitig als fehlerhaft erkannt. Ist z. B. der eine Eingang des ODER-Elements mit dem korrespondierenden Ausgangsport eines Kodierungsbits der Teilkodefolge der einen Rechnereinheit verbunden, so durchläuft dieses Signal das ODER-Element unverändert, wenn am anderen Eingang des UND-Elements eine 1-bit breite Freigabefolge mit "0"-Werten der anderen Rechnereinheit anliegt. Wird nun die Freigabefolge auf Werte mit einem "1"-Wert geändert, so liegen am Ausgang des ODER-Elements nur noch "1"-Werte an. Spätestens im übernächsten Zyklus wird dann auch diese Kodefolge empfängerseitig als fehlerhaft erkannt.

In einer bevorzugten Ausführungsform sind die beiden Rechnereinheiten über eine Datenleitung zum Austausch von Synchronisierungsdaten verbunden. Das Kodeerzeugerprogramm der jeweiligen Rechnereinheit erzeugt dann im Falle von Abweichungen bei den Synchronisierungsdaten eine geänderte Freigabefolge.

Der besondere Vorteil dabei ist, dass die eine Rechnereinheit die andere überwachen kann. Dies erfolgt auf Basis der gegenseitig ausgetauschten Synchronisierungsdaten. Hierzu erzeugen vorzugsweise beide Rechnereinheiten auf Basis eines Algorithmus synchron je ein gleiches und sich fortlaufend änderndes Synchronisierungsdatum, welches dann je über die Datenleitung zur anderen Rechnereinheit ausgegeben und dort verglichen wird. Empfängt nun eine Rechnereinheit über die Datenleitung ein vermutlich fehlerhaftes Synchronisierungsdatum, so sperrt die Rechnereinheit mittels der Ausgabe geänderter Freigabefolgen die Ausgabe der Teilkodefolge der anderen Rechnereinheit.

Im ordnungsgemäßen Betrieb kann im Falle einer Änderung eines auszugebenden Signals mittels der Kodeerzeugerprogramme die jeweilige Teilkodefolge geändert werden. Dieses ist z. B. dann der Fall, wenn ein durch eine interne Verknüpfungslogik erzeugtes sicheres Signal, ein aus einem übergeordneten Bussystem oder ein aus einem angeschlossenen Rückwandbus eingelesenes sicheres Signal zurückgenommen wird. Wird beispielsweise ein Not-Aus-Taster gedrückt, so wird das zugehörige sichere Signal "Not-Aus nicht gedrückt" zurückgenommen.

Im Besonderen weisen die Mittel zur Ausgabe des sicherheitsgerichteten Signals Mittel zur Umwandlung der Kodefolge in eine serielle Signalfolge auf. Dieses Mittel kann z. B. ein Parallel/Seriell-Umsetzer sein. Derartige Umsetzer sind als elektronische integrierte Bausteine erhältlich. Die serielle Signalfolge kann dann z. B. mittels einer Pulskodemodulation auf die beiden Leiter des AS-i-Bussystems aufmoduliert werden.

Ein Bussystem gemäß der Erfindung ist insbesondere in einem Bussystem auf Basis der EN 50295-Norm bzw. des IEC 62026-2-Standards verwendbar. Ein solches Bussystem ist insbesondere zur Übertragung von sicherheitsgerichteten Signalen geeignet.

Weitere vorteilhafte Eigenschaften der Erfindung ergeben sich aus deren beispielhafter Erläuterung anhand der Figuren. Es zeigt:
- FIG 1: ein Beispiel für ein Busmodul, welches zwei Bussysteme datentechnisch miteinander verbindet,
- FIG 2: einen beispielhaften Aufbau eines Busmoduls mit zwei Rechnereinheiten zur gemeinsamen Erzeugung einer Kodefolge gemäß der Erfindung und mit Mitteln zur Ausgabe der Kodefolge gemäß einer Ausführungsform der Erfindung und
- FIG 3: eine weitere Ausführungsform des beispielhaften Busmoduls gemäß FIG 2.

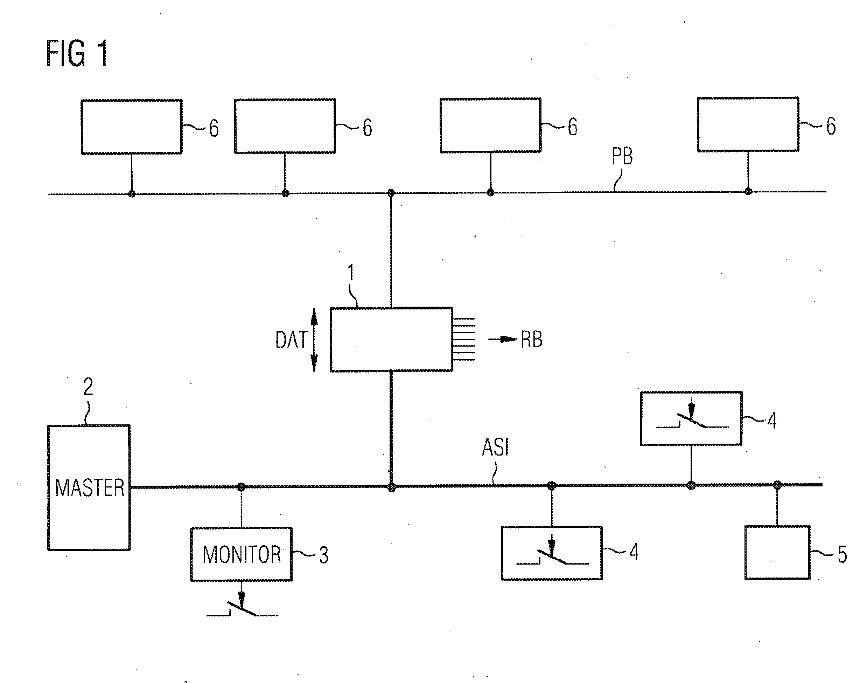

FIG 1 zeigt ein Beispiel für ein Busmodul 1, welches zwei Bussysteme ASI, PB datentechnisch miteinander verbindet. Im oberen Teil der FIG 1 ist beispielhaft ein Profibus PB als Bussystem der oberen Automatisierungsebene mit beispielhaft vier Busteilnehmern dargestellt. Im unteren Teil der FIG 1 ist ein Bussystem ASI der unteren Automatisierungsebene dargestellt. Zwischen diesen beiden Bussystemen ASI, PB können Daten DAT mit sicherheitsgerichteten Informationen, wie z. B. sicherheitsgerichtete Signale, ausgetauscht werden. Im Beispiel der FIG 1 fungiert das Busmodul 1 als so genanntes Gateway oder Link-Modul. Das Busmodul 1 kann durch interne logische Verknüpfung eigene sicherheitsgerichtete Signale erzeugen und diese auf die beiden Bussysteme ausgeben. Das Busmodul 1 kann aber auch weitere sicherheitsgerichtete Signale über einen Rückwandbus RB einlesen bzw. diese auf den Rückwandbus RB ausgeben.

Im unteren Teil der FIG 1 ist beispielhaft ein AS-i-Bussystem entsprechend der europäischen Norm EN 50295 bzw. des IEC 62026-2-Standards dargestellt. An diesem Bussystem ASI sind beispielhaft sechs Busmodule angeschlossen. Im linken Teil der FIG 1 ist ein Master 2 dargestellt, der adressierte Nachrichten versendet und der direkt die Antwort der angesprochenen Slaves 1, 4 erhält. Der Master 2 überwacht die Slaves 1, 4 permanent, indem er diese zyklisch mit einer Zykluszeit von weniger als 5 ms abfragt. Die Zykluszeit passt sich dabei automatisch an die Anzahl der angeschlossenen Slaves 1, 4 an. So beträgt die Zykluszeit im Fall von sechs Slaves 1, 4 ca. 1 ms; im Fall von 31 Slaves 1, 4 ca. 5 ms. Im Beispiel der FIG 1 fungiert das als Gateway ausgebildete Busmodul 1 ebenfalls als Slave. Mit dem Bezugszeichen 4 sind Aktuatoren mit der Funktionalität eines Slaves zur Ausgabe insbesondere von binären Signalen für Meldegeräte, Signalsäulen, Steuerrelais etc. dargestellt.

Mit dem Bezugszeichen 3 ist ein AS-i-Sicherheitsmonitor dargestellt, der die Signale von den sicherheitsgerichteten Komponenten überwacht und die Anlage entsprechend der definierten Stopp-Kategorie abschaltet. Mittels des Monitors 3 lassen sich komplexe Schutzabläufe wie NOT-AUS, Zweihandbedienung, Türzuhaltung oder Vor-Ort-Quittierung realisieren. Mit dem Bezugszeichen 5 ist ein AS-i-Netzteil bezeichnet, welches aus zwei Funktionsblöcken besteht, nämlich einem konventionellen Netzteil und einer Datenentkopplung, um einen signaltechnischen Kurzschluss der auf die Betriebsspannung aufmodulierten Daten über das Netzteil zu vermeiden. Das Netzteil stellt meist eine Spannung im Bereich von 24 V bis 30 V zur Verfügung.

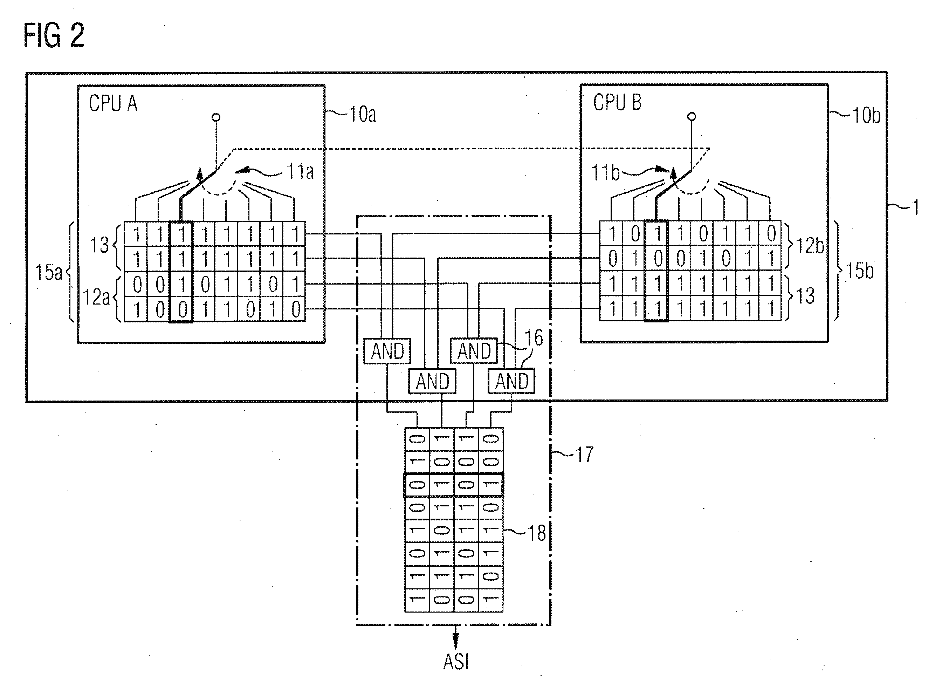

FIG 2 zeigt einen beispielhaften Aufbau eines Busmoduls 1 mit zwei Rechnereinheiten 10a, 10b zur gemeinsamen Erzeugung einer Kodefolge 18 und mit Mitteln zur Ausgabe 17 der Kodefolge 18 gemäß einer Ausführungsform der Erfindung. Die beiden Rechnereinheiten 10a, 10b erzeugen im ordnungsgemäßen Betrieb das sicherheitsgerichtete Signal parallel bzw. sie leiten dieses Signal über die Mittel zur Ausgabe 17 an das. Bussystem ASI weiter.

Gemäß der Erfindung weisen die Rechnereinheiten 10a, 10b Mittel zur Ausführung von Softwareprogrammen, insbesondere einer Vielzahl von Softwareroutinen, auf. Das Kodeerzeugerprogramm 11a der ersten Rechnereinheit 10a erzeugt dabei eine erste Teilkodefolge 12a der Kodefolge 18 und ein Kodeerzeugerprogramm 11b der zweiten Rechnereinheit 10b den restlichen Teil der Kodefolge 18 als zweite Teilkodefolge 12b. Die Ausgabe der sicherheitsgerichteten Signale in Form von sich wiederholenden eindeutigen Kodefolgen 18 ist durch einen Schalter mit einer Vielzahl von Schalterstellungen symbolisiert. Die gestrichelte Linie, welche die beiden "Schalter" verbindet, deutet das synchrone Weiterschalten und somit die synchrone Ausgabe der erzeugten Teilkodefolgen 12a, 12b an. Die gemäß dem Beispiel der FIG 2 erzeugten Teilkodefolgen 12a, 12b weisen eine 2-Bit breite Kodierung auf. Über die Mittel zur Ausgabe 17 ergeben die beiden 2-Bit breiten Teilkodefolgen 12a, 12b die 4-Bit breite Kodefolge 18. Zur Ausführung des jeweiligen Kodeerzeugerprogramms 11a, 11b wird zweckmäßigerweise ein Mikroprozessor bzw. eine CPU (für Central Processing Unit) verwendet.

Entsprechend einem Ausführungsbeispiel der Erfindung erzeugt das jeweilige Kodeerzeugerprogramm 11a, 11b neben den jeweiligen Teilkodefolgen 12a, 12b noch eine 2-Bit breite Freigabefolge 13, welche je Kodierungsbit einen logischen "1"-Wert aufweist. Die Mittel zur Ausgabe 17 weisen vier UND-Elemente 16 auf, an deren Ausgängen dann die Signale der Kodefolge 18 anliegen. Dabei ist ein Eingang eines UND-Elements 16 jeweils mit einem Kodierungsbit einer Freigabefolge 13 signaltechnisch verbunden, während der andere Eingang eines UND-Elements 16 mit dem jeweiligen Kodierbit der jeweils anderen Teilkodefolge 12a, 12b signaltechnisch verbunden ist. Die vier UND-Elemente 16 können bereits als Logikgatter in einem elektronischen Bauelement integriert sein. Ein derartiges Bauelement ist z. B. das integrierte Bauelement oder IC (für Integrated Circuit) mit der Typbezeichnung 7408 der bekannten 74er-TTL-Baureihe.

Im Beispiel der FIG 2 sind die beiden Rechnereinheiten 10a, 10b über eine Datenleitung zum Austausch von Synchronisierungsdaten SD verbunden. Das Kodeerzeugerprogramm 11a, 11b der jeweiligen Rechnereinheit 10a, 10b würde nun eine geänderte Freigabefolge 13 im Falle von Abweichungen bei den Synchronisierungsdaten SD erzeugen, d. h. zweckmäßigerweise eine Folge mit ausschließlichen "0"-Werten anstelle der "1"-Werte. Die dadurch geänderte Kodefolge 18 ist dann von einem Monitor-Busmodul 3 detektierbar.

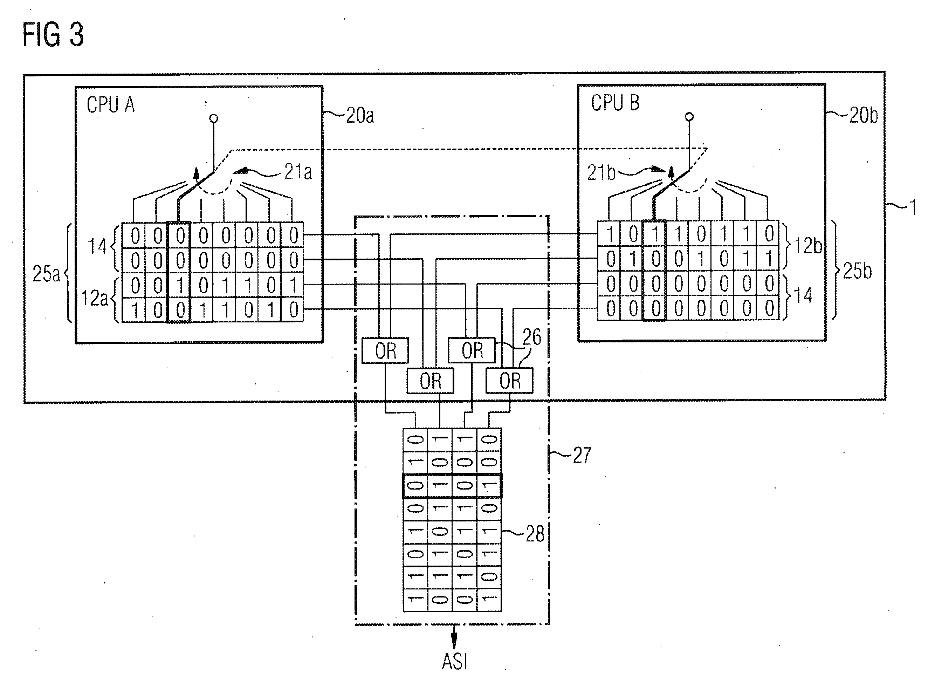

FIG 3 zeigt eine weitere Ausführungsform des beispielhaften Busmoduls 1 gemäß FIG 2. Die FIG 3 unterscheidet sich vom Beispiel der FIG 2 dadurch, dass anstelle von UND-Elementen 16 nun ODER-Elemente 26 bzw. ODER-Gatter und anstelle von Freigabefolgen 13 mit "1"-Werten nun Freigabefolgen 14 mit "0"-Werten verwendet werden.

## Patentansprüche

1. Busmodul zum Anschluss an ein Bussystem (ASI), mit ersten und zweiten Rechenmitteln (10a, 10b; 20a, 20b) und Ausgabemitteln (17, 27) zur Ausgabe sicherheitsgerichteter Signale in Form von sich wiederholenden eindeutigen Kodefolgen (18), **dadurch gekennzeichnet, dass** das Busmodul eine erste und zweite Rechnereinheit (10a, 10b; 20a, 20b) mit Mitteln zur Ausführung von Softwareprogrammen aufweist, wobei ein Kodeerzeugerprogramm (11a, 21a) der ersten Rechnereinheit (10a, 20a) eine erste Teilkodefolge (12a) der Kodefolge (18) und eine erste Freigabefolge und ein Kodeerzeugerprogramm (11b, 21b) der zweiten Rechnereinheit (10b, 20b) den restlichen Teil der Kodefolge (18) als zweite Teilkodefolge (12b) und eine zweite Freigabefolge erzeugt und wobei die Ausgabemittel (17, 27) Elemente zur logischen Verknüpfung der Kodierungsbits einer Teilkodefolge mit korrespondierenden Kodierungsbits der vom jeweils anderen Kodeerzeugerprogramm erzeugten Freigabefolge aufweisen.

2. Busmodul nach Anspruch 1, **dadurch gekennzeichnet, dass** die Kodeerzeugerprogramme (11a, 11b; 21a, 21b) ausschließlich Kodierungen der jeweils eigenen Teilkodefolge (12a, 12b) erzeugen.

3. Busmodul nach Anspruch 1 oder 2, **dadurch gekennzeichnet, dass** die Kodefolge (18) Kodierungen mit einem 4-Bit breiten Wertebereich aufweist, welche sich insbesondere nach sieben oder acht Kodierungen wiederholen, wobei jede Kodierung von einer vorangegangenen Kodierung verschieden ist.

4. Busmodul nach Anspruch 3, **dadurch gekennzeichnet, dass** die Kodefolge (18) nur binäre Kodierungen mit maximal drei "0"-Werten oder drei "1"-Werten aufweist.

5. Busmodul nach einem der vorangegangenen Ansprüche, **dadurch gekennzeichnet, dass**
- die Kodeerzeugerprogramme (11a, 21a; 11b, 21b) je eine Freigabefolge (13, 14) erzeugen, welche je Kodierungsbit ausschließlich binäre "0"- und/oder "1"-Werte enthält, und
- die Mittel zur Ausgabe (17, 27) der sicherheitsgerichteten Signale UND-Elemente (16) und/oder ODER-Elemente (26) zur logischen Verknüpfung der Kodierungsbits der jeweiligen Teilkodefolgen (12a, 12b) mit den jeweiligen korrespondierenden Kodierungsbits der Freigabefolgen (13, 14) zur Bildung der Kodefolge (18) aufweisen.

6. Busmodul nach Anspruch 5, **dadurch gekennzeichnet, dass**
- die beiden Rechnereinheiten (10a, 10b; 20a, 20b) über eine Datenleitung zum Austausch von Synchronisierungsdaten (SD) verbunden sind und
- das Kodeerzeugerprogramm (11a, 11b; 21a, 21b) der jeweiligen Rechnereinheit (10a, 10b; 20a, 20b) im Falle von Abweichungen bei den Synchronisierungsdaten (SD) eine geänderte Freigabefolge (13, 14) erzeugt.

7. Busmodul nach einem der vorangegangenen Ansprüche, **dadurch gekennzeichnet, dass** im Falle einer Änderung eines auszugebenden Signals die jeweilige Teilkodefolge (12a, 12b) mittels des Kodeerzeugerprogramms (11a, 11b; 21a, 21b) änderbar ist.

8. Busmodul nach einem der vorangegangenen Ansprüche, **dadurch gekennzeichnet, dass** die Mittel zur Ausgabe (17, 27) des sicherheitsgerichteten Signals Mittel zur Umwandlung der Kodefolge (18) in eine serielle Signalfolge aufweisen.

9. Busmodul nach Anspruch 8, **dadurch gekennzeichnet, dass** das Mittel zur Umwandlung der Kodefolge (18) in eine serielle Signalfolge ein Parallel/Seriell-Umsetzer ist.

10. Verwendung eines Busmoduls (1) nach einem der vorangegangenen Ansprüche in einem Bussystem auf Basis der EN 50295-Norm bzw. des IEC 62026-2-Standards.

## Claims

1. Bus module for connection to a bus system (ASI), comprising a first and second computing means (10a, 10b; 20a, 20b) and outputting means (17, 27) for outputting safety-relevant signals in the form of repeated unambiguous code sequences (18), **characterized in that** the bus module features a first and a second computer unit (10a, 10b; 20a, 20b) with means for executing software programs, wherein a code generator program (11a, 21a) of the first computer unit (10a, 20a) generates a first partial code sequence (12a) of the code sequence (18) and a first release sequence and a code generator program (11b, 21b) of the second computer unit (10b, 20b) generates the remaining part of the code sequence (18) as a second partial code sequence (12b) and a second release sequence and with the outputting means (17, 27) comprising elements for the logical linking of the encoding bits of a partial code sequence with corresponding encoding bits of the release sequence generated by another code generator program in each instance.

2. Bus module according to claim 1, **characterized in that** the code generator programs (11a, 11b; 21a, 21b) exclusively generate encodings of the respective individual partial code sequences (12a, 12b).

3. Bus module according to claim 1 or 2, **characterized in that** the code sequence (18) features encodings with a 4-bit wide value range, which are repeated in particular after seven or eight encodings, wherein each encoding is different from a preceding encoding.

4. Bus module according to claim 3, **characterized in that** the code sequence (18) only includes binary encodings with a maximum of three "0" values or three "1" values.

5. Bus module according to one of the preceding claims,
**characterized in that**
- the code generator programs (11a, 21a; 11b, 21b) each generate a release sequence (13, 14) which contains exclusively binary "0" and/or "1" values per encoding bit, and
- the means for outputting (17, 27) the safety-relevant signals feature AND elements (16) and/or OR elements (26) for logical association of the encoding bits of the respective partial code sequences (12a, 12b) with the relevant corresponding encoding bits of the release sequences (13, 14) for forming the code sequence (18).

6. Bus module according to claim 5, **characterized in that**
- the two computer units (10a, 10b; 20a, 20b) are connected via a data line for the exchange of synchronization data (SD), and
- the code generator program (11a, 11b; 21a, 21b) of the respective computer unit (10a, 10b; 20a, 20b) generates a changed release sequence (13, 14) in the event of variations in the synchronization data (SD).

7. Bus module according to one of the preceding claims, **characterized in that** the relevant partial code sequence (12a, 12b) can be changed by means of the code generator program (11a, 11b; 21a, 21b) in the case of a change of a signal that is to be output.

8. Bus module according to one of the preceding claims, **characterized in that** the means for outputting (17, 27) the safety-relevant signal feature means for converting the code sequence (18) into a serial signal sequence.

9. Bus module according to claim 8, **characterized in that** the means for converting the code sequence (18) into a serial signal sequence is a parallel/serial converter.

10. Use of a bus module (1) according to one of the preceding claims in a bus system which is based on the EN 50295 standard or the IEC 62026-2 standard.

## Revendications

1. Module de bus à raccorder à un système (ASI) de bus, comprenant un premier et un deuxième moyens (10a, 10b ; 20a, 20b) de calcul et des moyens (17, 27) d'émission de signaux de sécurité sous la forme de séquences (18) de codes récurrentes et univoques, **caractérisé en ce que** le module de bus a une première et une deuxième unités (10a, 10b ; 20a, 20b) de calcul, ayant des moyens de mise en oeuvre de programmes logiciels, un programme (11a, 21a) de production de codes de la première unité (10a, 20a) de calcul produisant une première sous-séquence (12a) de la séquence (18) de codes et une première séquence de validation et un programme (11b, 21b) de production de codes de la deuxième unité (10b, 20b) de calcul produisant la partie restante de la séquence (18) de codes en tant que deuxième sous-séquence (12b) de codes et une deuxième séquence de validation et dans lequel les moyens (17, 27) d'émission ont des éléments de combinaison logique des bits de codage d'une sous-séquence à des bits de codage correspondants de la séquence de validation produite par respectivement l'autre programme de production de codes.

2. Module de bus suivant la revendication 1, **caractérisé en ce que** les programmes (11a, 11b ; 21a, 21b) de production de codes produisent exclusivement des codages des sous-séquences (12a, 12b) propres respectives.

3. Module de bus suivant la revendication 1 ou 2, **caractérisé en ce que** la séquence (18) de codes a des codages ayant un domaine de valeur d'une largeur de 4 bits, qui se répètent notamment après sept ou huit codages, chaque codage étant différent d'un codage précédent.

4. Module de bus suivant la revendication 3, **caractérisé en ce que** la séquence (18) de codes n'a que des codages binaires ayant au maximum trois valeurs "0" ou trois valeurs " 1 " .

5. Module de bus suivant l'une des revendications précédentes, **caractérisé en ce que**
- les programmes (11a, 11b ; 21a, 21b) de production de codes produisent respectivement une séquence (13, 14) de validation qui contient, respectivement par bit de codage, exclusivement des valeurs binaires "0" et/ou "1" , et
- les moyens d'émission (17, 27) des signaux de sécurité ont des éléments (16) ET et/ou des éléments (26 ) OU de combinaison logique des bits de codage des sous-séquences (12a, 12b) de codes respectives ayant les bits de codage respectivement correspondants des séquences (13, 14) de validation pour la formation de la séquence (18) de codes.

6. Module de bus suivant la revendication 5, **caractérisé en ce que**
- les deux unités (10a, 10b ; 20a ,20b) de calcul sont reliées par une ligne de données pour l'échange de données (SD) de synchronisation, et
- le programme (11a, 11b ; 21a, 21b) de production de codes de l'unité (10a, 10b ; 20a ,20b) de calcul respective produit, dans le cas d'écarts dans les données (SD) de synchronisation, une séquence (13, 14) de validation modifiée.

7. Module de bus suivant l'une des revendications précédentes, **caractérisé en ce que**, dans le cas d'une modification d'un signal à émettre, la sous-séquence (12a, 12b) de codes respective peut être modifiée au moyen du programme (11a, 11b ; 21a, 21b) de production de codes.

8. Module de bus suivant l'une des revendications précédentes, **caractérisé en ce que** les moyens d'émission (17, 27) du signal de sécurité ont un moyen de transformation de la séquence (18) de codes en une séquence de signal série.

9. Module de bus suivant la revendication 8, **caractérisé en ce que** le moyen de transformation de la séquence (18) de codes en une séquence de signal série est un convertisseur parallèle/série.

10. Utilisation d'un module (1) de bus suivant l'une des revendications précédentes dans un système de bus sur la base de la norme EN 50295 ou de la norme IEC 62026-2.
